# EUROPEAN PATENT SPECIFICATION

(11) **EP 1 627 864 B1**
(45) Date of publication and mention of the grant of the patent: **25.07.2007**
(21) Application number: 05017213.9
(22) Date of filing: 08.08.2005
(51) Int. Cl.: C04B 40/00, C04B 28/02

(54) **Composition particularly for preparing cement mortars**
Zusammensetzung zur Herstellung von Zementmörtel
Composition pour la préparation de mortiers de ciment

(30) Priority: 20.08.2004 IT MI20041664
(43) Date of publication of application: 22.02.2006
(73) Proprietor: INTER.CHAPE S.R.L., 24040 Verdellino BG (IT)
(72) Inventor: Bellotti, Andrea, 24020 Ranica (Prov. of Bergamo) (IT)
(74) Representative: Modiano, Micaela Nadia

(56) References cited:
- WO-A-99/57076
- US-A- 4 205 994
- PATENT ABSTRACTS OF JAPAN vol. 2003, no. 04, 2 April 2003 (2003-04-02) & JP 2002 348158 A (DENKI KAGAKU KOGYO KK), 4 December 2002 (2002-12-04)
- PATENT ABSTRACTS OF JAPAN vol. 018, no. 322 (C-1214), 20 June 1994 (1994-06-20) & JP 06 072748 A (MITSUBISHI MATERIALS CORP), 15 March 1994 (1994-03-15)

## Description

The present invention relates to a composition, particularly as an additive, for preparing fluid cement mortars without shrinkage after hardening.

The mortars currently used to prepare foundations in the building sector have the appearance of a dry product with a consistency that can be likened to moist soil. The work for laying such a mortar is long and tiring and does not allow to achieve a surface of more than 200-250 square meters per day with three workers. Moreover, the product, even if laid by qualified workers, has many cracks and needs very long hardening times.

An attempt has been made to remedy this manual work by producing fluid mortars known as self-leveling, based on cement bonding agent or anhydrite, produced in plants for preparing dry ready-mixes, stored in appropriate silos and finally transported to the building site with expensive means of transport.

Self-leveling fluid mortars are a valid product, but the costs required to compensate this onerous effort are very high, and although the market accepts them, it has relegated them to a higher-quality kind and has limited their use only to unavoidable situations. Moreover, anhydrite blocks, due to their hydrophobic characteristics, cannot be used commonly in civil buildings, but can be used only in schools, hospitals, offices, etc.

It would be desirable, therefore, to have cement mortars that are as easy to apply and as quick to prepare at the building site as traditional mortars and are suitable to be used in the most disparate applications of the civil building sector.

The aim of the present invention is therefore to provide a composition, particularly for preparing fluid cement mortars, that overcomes the drawbacks of the background art.

Within this aim, an object of the invention is to provide a liquid or solid composition that allows to prepare fluid cement mortars that are easy and quick to apply at the building site and are further characterized by the absence of sedimentation phenomena and of shrinkage and/or cracking after hardening.

Another object is to provide a composition as described above that allows to prepare fluid cement mortars that are adapted for use in the most disparate fields of the civil building industry and in particular as a foundation for flooring.

Another object is to provide a fluid cement mortar having a composition as described above as an additive, particularly for preparing foundations for flooring.

This aim and these and other objects are achieved by a composition, particularly for preparing fluid cement mortars, in which said composition comprises neopentyl glycol and calcium oxide.

The aim and objects of the invention are also achieved by a fluid cement mortar, particularly for preparing foundations in the building sector, said composition comprising a composition as defined above.

In a first aspect, the invention relates to a composition in liquid or powder form, particularly for preparing fluid cement mortars.

In one embodiment, the composition according to the invention also comprises at least one optional ingredient selected among synthetic and/or natural anhydrite (crystals of CaSO₄), ventilated silica, one or more fluidifying agents, and mixtures thereof. Preferably, the composition of the invention comprises all of the optional ingredients listed above.

A particularly preferred fluidifying agent is a second composition which comprises naphthalene sulfonate and a second ingredient selected among a mixture of melamine and formaldehyde, polyacrylate and mixtures thereof. Said fluidifying agent may be in liquid or in powder form.

In one embodiment, the composition according to the invention comprises:
- neopentyl glycol in a quantity comprised between 1 and 15 parts by weight and
- calcium oxide in a quantity comprised between 5 and 30 parts by weight.

In a different embodiment, the neopentyl glycol and calcium oxide in the quantities referenced above receive the addition of:
- synthetic anhydrite in a quantity comprised between 1 and 25 parts by weight, and/or
- ventilated silica in a quantity comprised between 1 and 15 parts by weight.

The composition according to the invention, in each embodiment, allows to prepare cement mortars characterized by fluidity, no shrinkage or shrinkage lower than 300 µm/mm after hardening, no cracking or limited cracking after hardening, and lack of sedimentation of the fluid components with respect to the solid ones.

The Applicant has found surprisingly that the combination of at least neopentyl glycol and calcium oxide achieves superior results with respect to the use of the two ingredients separately. For example, it has been found that the shrinkage of cement mortar after hardening with neopentyl glycol alone reached values of approximately 30-50% of normal shrinkage, whereas by using the composition according to the invention the shrinkage reduction was distinctly greater, reaching in some cases total lack of shrinkage.

Likewise, it has also been found that calcium oxide introduced in the cement reacts after its hydration, to an extent that depends on its fineness, with the components of the cement and can reduce conveniently its shrinkage to the point of eliminating it. However, this effect is achieved with high doses, which can cause the calcium oxide not only to compensate the shrinkage but indeed cause expansion until the manufactured item breaks up. This characteristic becomes even more dangerous for example in the presence of moisture, of doses of unreacted product or of additive mortar having limited mechanical strength.

By mixing neopentyl glycol with calcium oxide, preferably with ventilated silica and/or anhydrite, more preferably with at least one fluidifying agent, even more preferably in the quantities referenced above, a synergistic interaction has been obtained among the various components, giving unique properties to the cement mortar in which the composition is incorporated.

The effectiveness of the composition according to the invention is not affected by variations of the humidity of the environment in which it is used and does not depend, within certain limits, on accurate dosage of the composition within the mortar.

The composition according to the invention, subjected to stress tests, has demonstrated surprisingly that, after being submerged underwater for 38 days, it swells to a very limited extent and causes no drawbacks at all. Moreover, in cases in which it was intentionally dosed incorrectly in excess within the mortar, it did not cause problems of any kind even at quantities at which the individual ingredients, if used separately, had caused the breakup of the hardened mortars.

In a second aspect, the invention relates to a cement mortar particularly for preparing foundations in the building sector, said mortar comprising a composition as defined above.

In one embodiment, the cement mortar comprises cement, sand and gravel and a composition as defined above.

In another highly preferred embodiment, the cement mortar comprises cement, sand and gravel and a composition as defined below:
- neopentyl glycol in a quantity comprised between 3 and 12 kg/m³ of cement mortar;
- calcium oxide in a quantity comprised between 10 and 20 kg/m³ of cement mortar;
- ventilated silica in a quantity comprised between 5 and 12 kg/m³ of cement mortar;
- synthetic anhydrite in a quantity comprised between 5 and 12 kg/m³ of cement mortar; and
- a fluidifying agent in a quantity comprised between 1.5 and 5 kg/m³ of cement mortar.

Advantageously, the particle size distribution of the sand is comprised between 0 and 4 mm (excluding a lower limit), while the particle size distribution of the gravel is comprised between 4 and 8 mm.

A cement mortar prepared according to the invention has demonstrated to have advantages that are similar to self-leveling ready-mixed mortars, but with a considerable saving in terms of costs of the material, these costs being entirely comparable to those of traditional sand-cement mixtures.

In another aspect, the invention relates to the use of a composition as defined above to prepare fluid cement mortars.

Other characteristics and advantages of the present invention will become better apparent from the description of the following preferred embodiments, intended exclusively by way of non-limiting example.

Likewise, although only some preferred embodiments of the invention are described explicitly in the examples that follow and in the text, it will be immediately apparent to the person skilled in the art that the composition and cement mortar according to the invention may be modified without however abandoning the inventive concept on which the invention is based.

### Example 1

A traditional cement mortar was prepared which comprised 300 kg/m³ of cement, 2000 kg/m³ of sand and gravel, and 200 l/m³ of water.

The final fluid mortar had the following characteristics:
- cone spreading during settling: 90 mm;
- compression M.S. : 200 kg/cm²;
- shrinkage: 850 µm/mm.

After application and hardening, the mortar was found to have leveled very unevenly and had extensive cracks in relief, lifted by contact.

The same mortar described above then received the addition of the composition according to the invention in a total quantity of approximately 30 kg/m³ of mortar. The physical tests were repeated on the mortar with the additive, obtaining the following results:
- cone spreading: 150/170 mm;
- compression M.S. : 200 kg/cm²;
- shrinkage: 100-200 µm/mm.
   The mortar with additive spread uniformly and evenly without effort and had no cracks after hardening.
   Such a mortar can be employed usefully, therefore, for example as a foundation for flooring, forming perfectly coplanar surfaces without cracks. The composition according to the invention has also been used in the preparation of mortars for skimming or leveling, ancillary shoring, anchoring etc, and wherever a shrinkage-free mortar is required.

### Example 2.

As mentioned above, the invention allowed to obtain an unexpected synergy with respect to the separate use of the individual ingredients of the composition. This synergy is demonstrated in the following example.

Traditional cement mortar, prepared according to Example 1, received the addition of the following ingredients:
(A) neopentyl glycol alone,
(B) calcium oxide alone,
(C) neopentyl glycol and calcium oxide in a quantity respectively of 7.5 kg/m³ of mortar and 17 kg/m³ of mortar,
(D) neopentyl glycol and calcium oxide in the quantities indicated in (C) plus anhydrite, and
(E) neopentyl glycol and calcium oxide in the quantities indicated in (C) plus anhydrite, silica and polyacrylate (composition of Example 1).

The physical properties of each one of the five compositions (A)-(E) were then tested as in the preceding example, obtaining the following results:

| | |
|---|---|
| for composition (A): | - compression M.S. : 150 kg/cm², |
| | - cone spreading: 100 mm, |
| | - shrinkage: 550 µm/mm; |
| for composition (B): | - compression M.S. : 220 kg/cm², |
| | - cone spreading: 90 mm, |
| | - shrinkage: 200-300 µm/mm; |

However, the resulting specimens were found to be extremely sensitive to humidity, and breakup of the specimen by immersion in water was observed in several cases;

| | |
|---|---|
| for composition (C): | - compression M.S. : 200 kg/cm², |
| | - cone spreading: 90 mm, |
| | - shrinkage: 200-300 µm/mm; |

In this case, the product was not sensitive to humidity, and no breakup of the test specimen was reported after immersion in water;

| | |
|---|---|
| for composition (D): | - compression M.S. : 200 kg/cm², |
| | - cone spreading: 90 mm, |
| | - shrinkage: 100-200 µm/mm; |
| for composition (E): | - compression M.S. : 200 kg/cm², |
| | - cone spreading: 150/170 mm, |
| | - shrinkage: 100-200 µm/mm. |

It is believed, therefore, that the cited example fully demonstrates that use of the individual components is unable to determine the surprising results in terms of shrinkage reduction and strength of the final product that can instead be achieved with the composition according to the invention in all of its embodiments.

## Claims

1. Additive for preparing fluid cement mortars, comprising neopentyl glycol and calcium oxide.

2. The additive according to claim 1, further comprising at least one of the optional ingredients selected among synthetic anhydrite, ventilated silica, one or more fluidifying agents, and mixtures thereof.

3. The additive according to claim 2, comprising all of the optional ingredients.

4. The additive according to one or more of claims 2 and 3, wherein the fluidifying agent is a second composition which comprises naphthalene sulfonate and a second ingredient selected among melamine/formaldehyde mixture, polyacrylate, and mixtures thereof.

5. The additive according to one or more of the preceding claims, in liquid or powder form.

6. The additive according to one or more of claims 2 to 5, wherein the one or more fluidifying agents are in liquid or powder form.

7. The additive according to one or more of the preceding claims, comprising:
- neopentyl glycol in a quantity comprised between 1 and 15 parts by weight and
- calcium oxide in a quantity comprised between 5 and 30 parts by weight.

8. The additive according to claim 7, comprising:
- neopentyl glycol in a quantity comprised between 1 and 15 parts by weight;
- calcium oxide in a quantity comprised between 5 and 30 parts by weight; and at least one between
- synthetic anhydrite in a quantity comprised between 1 and 25 parts by weight, and
- ventilated silica in a quantity comprised between 1 and 15 parts by weight.

9. The additive according to one or more of the preceding claims, in which a synergistic interaction is obtained among the various ingredients.

10. A fluid cement mortar, particularly for preparing foundations in the building sector, said mortar comprising the additive according to one or more of claims 1 to 9.

11. The fluid cement mortar according to claim 10, further comprising cement, sand and gravel.

12. The fluid cement mortar according to claim 11, wherein the additive comprises:
- neopentyl glycol in a quantity comprised between 3 and 12 kg/m³ of mortar;
- calcium oxide in a quantity comprised between 10 and 20 kg/m³ of mortar;
- ventilated silica in a quantity comprised between 5 and 12 kg/m³ of mortar;
- synthetic anhydrite in a quantity comprised between 5 and 12 kg/m³ of mortar; and
- fluidifying agent in a quantity comprised between 1.5 and 5 kg/m³ of mortar.

13. The fluid cement mortar according to any one of claims 11 and 12, wherein the sand has a granulometry comprised between 0 and 4 mm, lower limit excluded, and the gravel has a granulometry comprised between 4 and 8 mm.

14. The fluid cement mortar according to one or more of claims 10 to 13, wherein:
- shrinkage after hardening is nil or less than 300 µm/mm,
- cracking after hardening is nil or limited, and
- sedimentation of the fluid components with respect to the solid ones is absent.

15. Use of the additive according to one or more of claims 1 to 9 for preparing a fluid cement mortar.

## Patentansprüche

1. Zusatz zur Herstellung von flüssigem Zementmörtel, umfassend Neopentylglykol und Calciumoxid.

2. Zusatz nach Anspruch 1, der außerdem wenigstens einen der optionalen Bestandteile ausgewählt aus synthetischem Anhydrit, belüftetem Siliciumdioxid, einem oder mehreren verflüssigenden Mitteln und Mischungen daraus aufweist.

3. Zusatz nach Anspruch 2, der alle optionalen Bestandteile umfaßt.

4. Zusatz nach einem oder mehreren der Ansprüche 2 oder 3, bei dem das verflüssigende Mittel eine zweite Zusammensetzung ist, die Naphthalinsulfonat und einen zweiten Bestandteil, ausgewählt aus Melamin/Formaldehydmischung, Polyacrylat und Mischungen daraus, aufweist.

5. Zusatz nach einem oder mehreren der vorherigen Ansprüche in flüssiger oder Pulverform.

6. Zusatz nach einem oder mehreren der Ansprüche 2 bis 5, bei dem das eine oder die mehreren verflüssigenden Mittel in flüssiger oder Pulverform vorhanden sind,

7. Zusatz nach einem oder mehreren der vorherigen Ansprüche, umfassend:
- Neopentylglykol in einer Menge umfassend zwischen 1 und 15 Gewichtsteile und
- Calciumoxid in einer Menge umfassend zwischen 5 und 30 Gewichtsteile.

8. Zusatz nach Anspruch 7, umfassend:
- Neopentylglykol in einer Menge umfassend zwischen 1 und 15 Gewichtsteile und
- Calciumoxid in einer Menge umfassend zwischen 5 und 30 Gewichtsteile und wenigstens einem ausgewählt aus
- synthetischem Anhydrit in einer Menge umfassend zwischen 1 und 25 Gewichtsteile
und
- belüftetem Siliciumdioxid in einer Menge umfassend zwischen 1 und 15 Gewichtsteile.

9. Zusatz nach einem oder mehreren der vorherigen Ansprüche, bei dem eine synergistische Wechselwirkung zwischen den verschiedenen Bestandteilen erhalten wird.

10. Flüssiger Zementmörtel insbesondere zur Herstellung Fundamenten auf dem Gebäudesektor, der Mörtel umfaßt den Zusatz nach einem oder mehreren der Ansprüche 1 bis 9.

11. Flüssiger Zementmörtel nach Anspruch 10, der außerdem Zement, Sand und Kies umfaßt.

12. Flüssiger Zementmörtel nach Anspruch 11, bei dem der Zusatz umfaßt:
- Neopentylglykol in einer Menge umfassend zwischen 3 und 12 kg/m³ des Mörtels;
- Calciumoxid in einer Menge umfassend zwischen 10 und 20 kg/m³;
- belüftetes Silciumdioxid in einer Menge umfassend zwischen 5 und 12 kg/m³;
- synthetisches Anhydrit in einer Menge umfassend zwischen 5 und 12 kg/m³;
und
- verflüssigendes Mittel in einer Menge umfassend zwischen 1,5 und 5 kg/m³.

13. Flüssiger Zementmörtel nach einem der Ansprüche 11 oder 12, bei dem der Sand eine Granulometrie umfassend zwischen 0 und 4 mm, ein niedrigerer Grenzwert ist ausgeschlossen, und der Kies eine Granulometrie umfassend zwischen 4 und 8 mm hat.

14. Flüssiger Zementmörtel nach einem oder mehreren der Ansprüche 10 bis 13, bei dem
- Schrumpfung nach dem Aushärten gleich Null oder weniger als 300 µm/mm ist,
- Rissigkeit nach dem Aushärten gleich Null oder begrenzt ist, und
- Sedimentation der flüssigen Komponenten im Hinblick auf die festen nicht vorhanden ist.

15. Verwendung des Zusatzes nach einem oder mehreren der Ansprüche 1 bis 9 zur Herstellung eines flüssigen Zementmörtels,

## Revendications

1. Additif pour préparer des mortiers fluides de ciment, comprenant du néopentyl glycol et de l'oxyde de calcium.

2. Additif selon la revendication 1, comprenant en outre au moins l'un des ingrédients facultatifs choisis parmi un anhydrite synthétique, de la silice ventilée, un ou plusieurs agents fluidifiants, et leurs mélanges

3. Additif selon la revendication 2, comprenant tous les ingrédients facultatifs.

4. Additif selon une ou plusieurs des revendications 2 et 3, dans lequel l'agent fluidifiant est une seconde composition qui comprend du sulfonate de naphtalène et un second ingrédient choisi parmi un mélange de mélamine/formaldéhyde, un polyacrylate, et leurs mélanges.

5. Additif selon une ou plusieurs des revendications précédentes, sous forme de liquide ou de poudre.

6. Additif selon une ou plusieurs des revendications 2 à 5, dans lequel un ou plusieurs agents fluidifiants sont sous forme liquide ou de poudre.

7. Additif selon une ou plusieurs des revendications précédentes, comprenant :
- du néopentyl glycol en une quantité comprise entre 1 et 15 parties en poids et
- de l'oxyde de calcium en une quantité comprise entre 5 et 30 parties en poids.

8. Additif selon la revendication 7, comprenant :
- du néopentyl glycol en une quantité comprise entre 1 et 15 parties en poids et
- de l'oxyde de calcium en une quantité comprise entre 5 et 30 parties en poids et au moins un composé choisi entre
- l'anhydrite synthétique en une quantité comprise entre 1 et 25 parties en poids et
- la silice ventilée en une quantité comprise entre 1 et 15 parties en poids.

9. Additif selon une ou plusieurs des revendications précédentes, dans lequel on obtient une interaction synergique entre les différents ingrédients.

10. Mortier de ciment fluide, en particulier pour préparer des fondations dans le secteur de la construction, ledit mortier comprenant l'additif selon une ou plusieurs des revendications 1 à 9.

11. Mortier de ciment fluide selon la revendication 10, comprenant en outre du ciment, du sable et du gravier.

12. Mortier de ciment fluide selon la revendication 11, dans lequel l'additif comprend :
- du néopentyl glycol en une quantité comprise entre 3 et 12 kg/m³ de mortier ;
- de l'oxyde de calcium en une quantité comprise entre 10 et 20 kg/m³ de mortier ;
- de la silice ventilée en une quantité comprise entre 5 et 12 kg/m³ de mortier;
- de l'anhydrite synthétique en une quantité comprise entre 5 et 12 kg/m³ de mortier ;
et
- un agent fluidifiant en une quantité comprise entre 1,5 et 5 kg/m³ de mortier.

13. Mortier de ciment fluide selon l'une quelconque des revendications 11 et 12, dans lequel le sable a une granulométrie comprise entre 0 et 4 mm, la limite inférieure exclue, et le gravier a une granulométrie comprise entre 4 et 8 mm.

14. Mortier de ciment fluide selon une ou plusieurs des revendications 10 à 13, dans lequel :
- le retrait après durcissement est nul ou inférieur à 300 µm/mm,
- les craquelures après durcissement sont nulles ou limitées, et
- la sédimentation des composants fluides par rapport à celle des composés solides est absente.

15. Utilisation de l'additif selon une ou plusieurs des revendications 1 à 9 pour préparer un mortier de ciment fluide.
